# EUROPEAN PATENT SPECIFICATION

(11) **EP 2 718 688 B1**
(45) Date of publication and mention of the grant of the patent: **20.01.2016**
(21) Application number: 12738011.1
(22) Date of filing: 08.06.2012
(51) Int. Cl.: G01M 11/00, G01M 11/08

(54) **EMITTING DEVICE, SYSTEM AND METHOD FOR TESTING OF AN OPTICAL FIBER**
LICHTEMITTIERENDE VORRICHTUNG UND VERFAHREN ZUM TESTEN EINER GLASFASER.
DISPOSITIF, SYSTÈME ET PROCÉDÉ D'ÉMISSION POUR TESTER UNE FIBRE OPTIQUE

(30) Priority: 09.06.2011 BE 201100349
(43) Date of publication of application: 16.04.2014
(73) Proprietor: Crosswise NV, 2960 St.-Job-in't Goor (BE)
(72) Inventor: WILDERJANS, Hein, Juliaan, Willem, B-2960 Sint-Job-in 't-Goor (BE)
(74) Representative: D'Halleweyn, Nele Veerle Trees Gertrudis
(86) International application number: PCT/BE2012/000028
(87) International publication number: WO 2012/167334

(56) References cited:
- EP-A2- 1 757 966
- US-A- 5 357 362
- US-A1- 2003 052 258
- US-A1- 2008 024 769

## Description

The present invention relates to an emitting device for testing an optical fibre as according to the preamble of claim 1, to a system for testing an optical fibre comprising such an emitting device, and to a method for testing an optical fibre.

Fibre networks can fall substantially into two categories: point-to-point and point-to-multipoint. As soon as more than one optical fibre is present between the starting point and the end point of a connection, there is a risk of optical fibres being switched. The only way of avoiding this type of error is to test the optical fibres one by one between the starting point and the end point. During installation of an optical fibre network it is thus of great importance to be able to test and verify the optical fibres. In the existing test equipment use is typically made of laser diodes which emit light of a determined wavelength through the optical fibre. A receiving device can then derive, as a function of the wavelength of the received light, which optical fibre is involved. The drawback of such a method is that the receiving device has to be able to receive different wavelengths, and must therefore typically comprise photodiodes for blue light, green light, yellow light and so on. It is further not possible with the existing equipment to perform simultaneous measurements on optical fibres ending at different locations.

EP 1 757 966 discloses a method for identifying an optical cable for optical communication from a remote place, by forming an interferometer including two strands of an optical fibre in the optical cable, and by applying in the remote place a disturbance of a popping sound to an optical cable to be identified. The disturbance is detected and regenerated in the form of a sound. The optical cable is identified by comparing the regenerated signal and the disturbed signal in the remote place to thereby prevent an incorrect optical cable from being cut.

US 2008/024769 discloses a method, apparatus and system for minimally intrusive fiber identification comprising imparting a time-varying modulation onto an optical signal propagating in an optical fibre, and subsequently detecting the presence of the time-varying modulation in the optical signal transmitting through the fibre to identify the fibre.

US 2003/052258 discloses a method to identify a fiber optic cable by causing a beam of polarised light to pass down the cable to a first site at which an electromagnetic field is applied to the cable. The electromagnetic field traverses the cable in an essentially transverse direction and has a time-varying component orientated along the length of the cable at the first site, with the component varying so that the line integral thereof along the cable is non-zero. This results in a variation in the polarisation of the light, which can the be detected by a polarisation discriminator at a second site, thereby to identify the cable.

US 5,357,362 discloses an optical modulation method operable in an optical transmission path using an optical fibre, wherein an optical fibre bending region is formed by bending a portion of the optical fibre into a U shape having a predetermined bending width. Intensity modulation of light propagating in the optical fibre is performed using a signal to be transmitted by adjusting the bending width of the optical fibre bending region in correspondence with the signal to be transmitted with reference to the bending width set point as a centre.

The present invention has for its object to provide an emitting device, system and method of the type stated in the preamble with which an optical fibre can be identified in very simple manner and with which it is particularly possible, even in a complex network, to test and identify individual optical fibres.

An emitting device according to the invention is distinguished for this purpose in that it comprises a modulator which is coupled to an optical module and adapted to modulate an optical signal with a modulation signal associated with the identification of the optical fibre for testing. The emitting device preferably further comprises a memory for storing a modulation signal associated with an identification of the optical fibre for testing.

According to an advantageous embodiment, the optical module is a laser module adapted to emit a laser signal. The skilled person will appreciate that the term laser module is understood to mean for instance a high-power semiconductor laser as well as a low-power LED. For a low-cost embodiment of the device or the system of the invention use could for instance be made of an LED, while a more reliable embodiment can make use of a more expensive semiconductor laser. For more specific applications, such as small networks with Plastic Optical Fibre (POF), it is also possible to consider an LED for visible light as laser module. Such light can after all also be modulated with a modulation signal, for instance a simple audio signal.

All optical fibres of a network can in this way be tested with the same device, irrespective of the number of optical fibres. The fact that the optical signal is modulated with a modulation signal associated with an identification of the optical fibre for testing makes it possible to simultaneously test a plurality of optical fibres having different identifications.

According to an advantageous embodiment, the modulator comprises an audio module with a memory in which an audio signal is stored. This audio signal is associated with an identification of the optical fibre for testing and is for instance a spoken message or a tone. The spoken message can for instance be a recorded voice saying "optical fibre 1".

According to another possible embodiment, the modulator comprises a text module with a memory in which a text message is stored, wherein the text message is associated with an identification of the optical fibre for testing. More generally, the modulation signal will be typically associated with a number of the optical fibre for testing.

According to an advantageous embodiment, the optical module comprises a laser diode.

According to a possible embodiment, the emitting device comprises a front panel with one or more glass fibre connectors for connection to the one or more fibres for testing. According to another variant, the emitting device can be provided with a front panel through which a number of optical cords protrude, wherein a connector can then be provided at the outer end of each cord. An advantage of this latter variant is that the output of the emitting device can be directly coupled to the fibre for measuring instead of having to use a patch cord provided with two connectors, wherein a first connector thereof is connected to the connector on the front panel and a second is connected to the optical fibre. On the other hand this variant has the drawback, particularly in the case of a larger number of optical cords, that a less convenient device is obtained, wherein a large number of cords which are not always needed hang from the front panel. A front panel with connectors mounted thereon will therefore be preferable for most applications.

According to a possible embodiment, the emitting device further comprises a battery for powering the optical module(s) and the modulator(s); or an AC/DC converter for converting the mains voltage to a suitable DC voltage for powering the optical module(s) and the modulator(s).

The present invention also relates to a device for testing a plurality of optical fibres. The device comprises a plurality of optical modules which are each coupled to a modulator adapted to modulate the respective optical signal with a modulation signal associated with the respective identification of the respective optical fibre. Such a device will thus allow simultaneous testing of a plurality of optical fibres, wherein the respective modulated laser signals emitted by the device are each modulated with a modulation signal associated with the respective identification of the optical fibre.

The invention further relates to a system for testing an optical fibre incorporating an emitting device according to any one of the above described embodiments and a receiving device. The receiving device comprises an optical receiver adapted to receive the modulated optical signal from the emitting device. The receiving device further has a demodulator adapted to demodulate the received modulated optical signal for the purpose of extracting therefrom the identification of the optical fibre for testing.

According to an advantageous embodiment, the demodulator of the receiving device comprises an audio playback module adapted to reproduce an audio signal extracted from the received modulated optical signal. According to another variant, the demodulator can comprise a display module for displaying a text message extracted from the received modulated optical signal.

Note that the receiving device can be formed by an optical mobile phone programmed in a suitable manner, wherein the wavelength of the optical signal must then be the same as the wavelength at which the optical mobile phone can operate. It is then recommended to opt for an optical module with a suitable wavelength as emitting device.

According to a possible embodiment the system comprises a memory in which is stored a set of modulation signals associated with a corresponding set of identifications of optical fibres for testing.

Finally, the invention relates to a method for testing an optical fibre which is distinguished by the following steps: an optical signal is modulated with a modulation signal associated with an identification of the optical fibre for testing; this modulated optical signal is emitted from a first point of the optical fibre for testing; this emitted modulated optical signal is received at a second point of the optical fibre for testing; and the received modulated optical signal is demodulated for the purpose of deriving the identification of the optical fibre for testing.

According to an advantageous embodiment, the modulation signal used in the method is an audio signal, in particular a spoken message, such as a spoken message with a spoken number of the optical fibre. According to another variant, the modulation signal comprises a text message.

The invention also relates to a method for testing a plurality of optical fibres which is distinguished in that the method comprises the following steps: a plurality of laser signals are modulated with respective modulation signals associated with the respective identifications of the plurality of optical fibres for testing; the respective modulated laser signals are emitted in each case from a first point of the respective optical fibre to a second point of the respective optical fibre; these respective modulated laser signals are received in each case at a second point of the respective optical fibre; and the respective received modulated laser signals are demodulated for the purpose of deriving the respective identifications of the respective plurality of optical fibres for testing.

Such a method will thus allow simultaneous testing of a plurality of optical fibres.

According to a possible embodiment, the modulation signal is associated with a number of the optical fibre for testing.

According to a possible embodiment, the method further comprises:
- modulating a plurality of laser signals with respective modulation signals associated with respective identifications of the plurality of optical fibres for testing;
- emitting the respective modulated laser signals in each case from a first point of the respective plurality of optical fibres for testing;
- receiving these modulated laser signals in each case at a second point of the respective plurality of optical fibres for testing;
- demodulating the respective received modulated laser signals for the purpose of deriving the respective identifications of the respective plurality of optical fibres for testing.

The invention will be further elucidated on the basis of a number of by no means limitative exemplary embodiments of an emitting device, system and method according to the invention, with reference to the enclosed drawings, in which:
Figure 1 is a block diagram of a first embodiment of a system according to the invention;
Figure 2 is a block diagram of a second embodiment of a system according to the invention;
Figure 3 is a block diagram of a third embodiment of a system according to the invention;
Figure 4 shows a block diagram of a possible embodiment of an emitting device according to the invention;
Figure 5 shows a block diagram of a possible embodiment of a receiving device according to the invention;
Figure 6 shows a block diagram of a further possible embodiment of an emitting device according to the invention;
Figure 7 shows a more detailed block diagram of an embodiment of an emitting device according to the invention; and
Figure 8 shows a more detailed block diagram of an embodiment of a receiving device according to the invention.

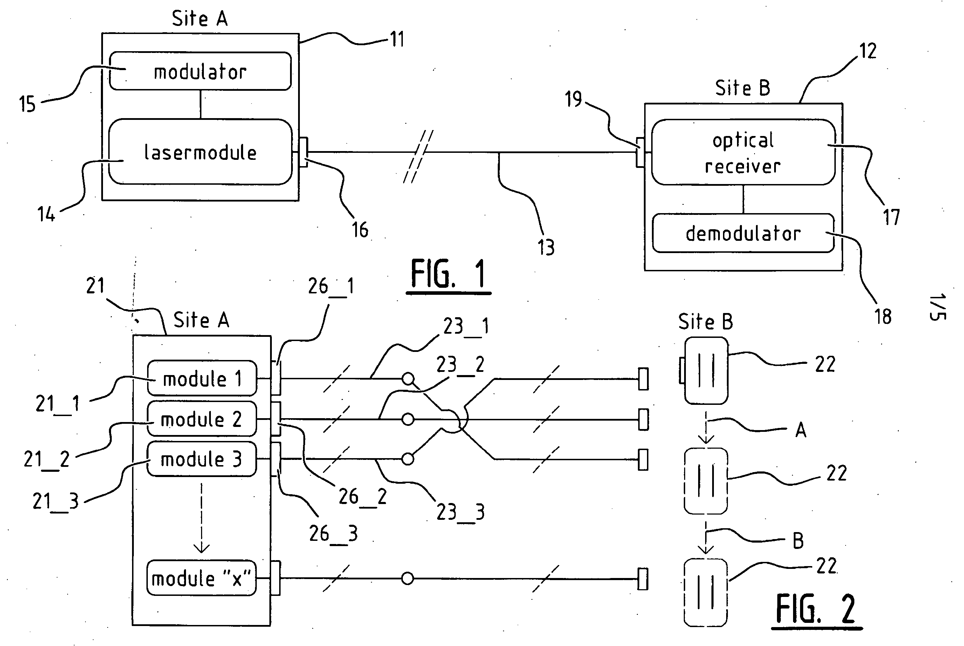

The embodiment illustrated in figure 1 of a system for testing of an optical fibre comprises an emitting device 11 and a receiving device 12. Emitting device 11 is intended for use at a first location "site A", where emitting device 11 is connected to an optical fibre 13 which has to be identified at a second location "site B".

Emitting device 11 comprises an optical module, in particular a laser module 14, a modulator 15 and a glass fibre connector 16. Optical module 14 is adapted to emit an optical signal over optical fibre 13. Modulator 15 is coupled to optical module 14 and adapted to modulate the optical signal with a modulation signal associated with an identification of the optical fibre for testing. The emitting device will thus emit a modulated optical signal over the optical fibre for testing, wherein an identification of this optical fibre can be derived from the modulation signal. The modulation signal can for instance be an analog coded signal, a digital coded signal, an analog or digital audio signal such as a spoken message, a tone, an analog or digital data signal such as for instance a text message, and so on. In the case of a spoken message, this can for instance be a recorded voice which continuously produces the message "optical fibre 1, optical fibre 1, optical fibre 1, ...". In the case of a text message, this can for instance be a text message comprising "optical fibre 1, optical fibre 1, optical fibre 1, ...".

Receiving device 12 comprises an optical receiver 17, a demodulator 18 and a glass fibre connector 19. Optical receiver 17 is adapted to receive the modulated optical signal from emitting device 11. Demodulator 18 is coupled to optical receiver 17 and is adapted to demodulate the received modulated optical signal in order to extract the identification of the optical fibre therefrom.

A second embodiment of a system according to the invention will now be described with reference to figure 2 which is particularly convenient when a plurality of optical fibres have to be tested, wherein it is known that errors can occur wherein optical fibres are switched and wherein it is of great importance to know which is the first optical fibre, the second optical fibre and so on. This system comprises an emitting device 21 and a number of receiving devices 22. Emitting device 21 comprises a number of emitting modules 21_1, 21_2 etc., each provided with an optical module and a modulator. Note that one modulating unit could also be provided for the purpose of modulating the laser signals from the different optical modules. A glass fibre connector 26_1, 26_2 etc. is coupled to each emitting module 21_1, 21_2 etc. Glass fibre connectors 26_1, 26_2 etc. are connected to respective optical fibres 23_1, 23_2 etc. In the shown example the first optical fibre 23_1 is switched between the location "site A" and the location "site B" with the third optical fibre 23_3. When a technician makes a connection with a receiving device 22 to an optical fibre at the location "site B", his/her receiving device 22 will be able to recognise the identification of the optical fibre on the basis of the received modulated optical signal. Receiving device 22 will thus derive an identification associated with the third optical fibre.

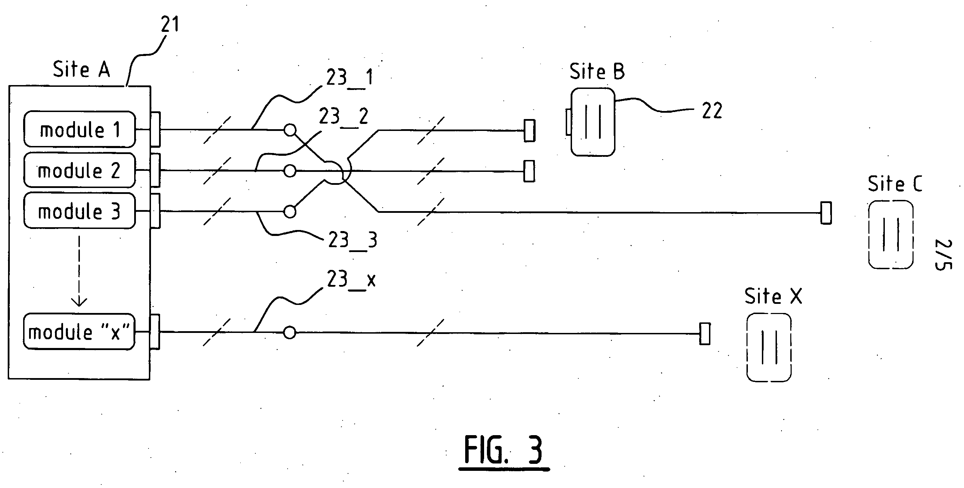

When the different cables or optical fibres for testing are situated at the same second location "site B" as illustrated in the example of figure 2, the same technician can use his/her receiving device 22 to successively test the different optical fibres, see arrows A and B. When the different optical fibres 23_1, 23_2 etc. do not end at the same second location but at different locations, different technicians can then be used to test the optical fibres on the receiving side. Such an example is illustrated in figure 3. In this example the optical fibres 23_1 and 23_2 end at a location "site B", while the optical fibre 23_3 ends at a location "site C", and the optical fibre X ends at a location "site X". Such an embodiment of the system thus allows different technicians to simultaneously test the plurality of optical fibres at different locations without an additional technician being necessary at the first location "site A".

According to a possible embodiment of the system, a switch could be provided for each emitting module such that the emitting modules can each be switched on and off individually. An indicator such as an LED could then optionally also be provided per emitting module in order to ensure that it is possible to see at a glance which emitting modules are in use.

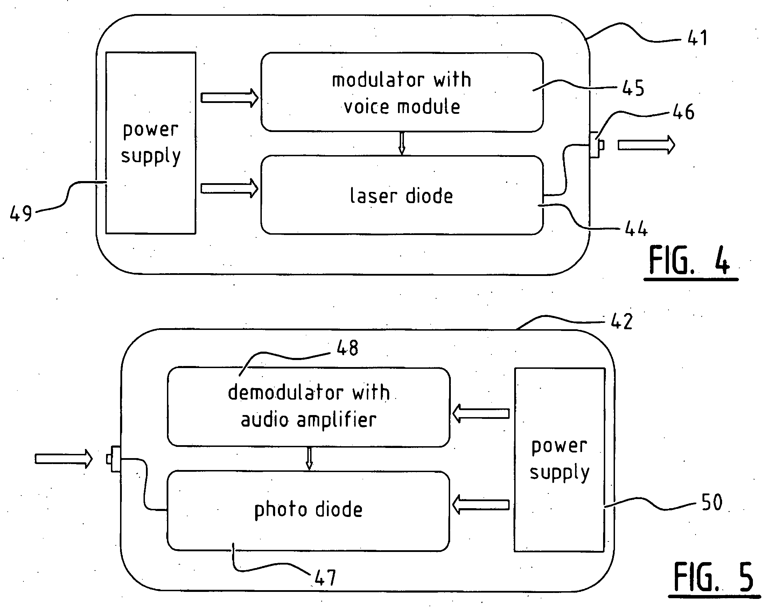

Figure 4 illustrates a more detailed embodiment of an emitting device 41 according to the invention. In this embodiment emitting device 41 comprises a modulator 45 with a voice module. This can for instance be a voice recording chip with a continuous playback function (single chip voice recorder inclusive loop playback), which thus makes it possible to continuously modulate the optical signal with the same spoken message, for instance a spoken message "optical fibre 1". This can for instance be a chip of the ISD 1200/1400 etc. generation. Depending on the type of chip, there is a longer or shorter recording time, more or fewer looping functions and so on. Examples of suitable chips can be found on httr://www.experimentalistsanonymous.com/diy/Datasheets/ISD%20Chipcorder%20Circuit%20E xamples.pdf.Emitting device 41 further comprises a power supply module 49, which can for instance be a battery. According to another variant, the power supply module is adapted to be connected to the mains and comprises an AC/DC converter for converting the mains voltage to a suitable DC voltage for powering laser diode 44 and the modulator with voice module 45.

Figure 5 illustrates a receiving device 42 which can be used in combination with emitting device 41. Receiving device 42 comprises a photodiode 47 for receiving the modulated optical signal of emitting device 41. Receiving device 42 further comprises a demodulator 48 with an audio amplifier. This demodulator with audio amplifier is adapted to extract the spoken message from the modulated signal and to reproduce this spoken message. Note that as receiving device a portable optical telephone can also be used which is adapted to receive and demodulate the modulated optical signal. Note that fairly simple standard optical telephones exist which are suitable for this application. The skilled person will appreciate that laser diode 44 of the emitting device must then be chosen such that the wavelength of the optical signal corresponds to the wavelength at which the optical telephone operates.

Although the embodiments illustrated in figures 4 and 5 are intended specifically for spoken messages, the skilled person will appreciate that analog devices can be provided which are able to operate with other analog audio signals such as tones and so on. According to yet another variant, it is possible to use text messages, wherein the modulator is adapted for instance to continuously modulate the text message "optical fibre 1" on the optical signal. In this case the demodulator in the receiving device can comprise a display screen for displaying this text message.

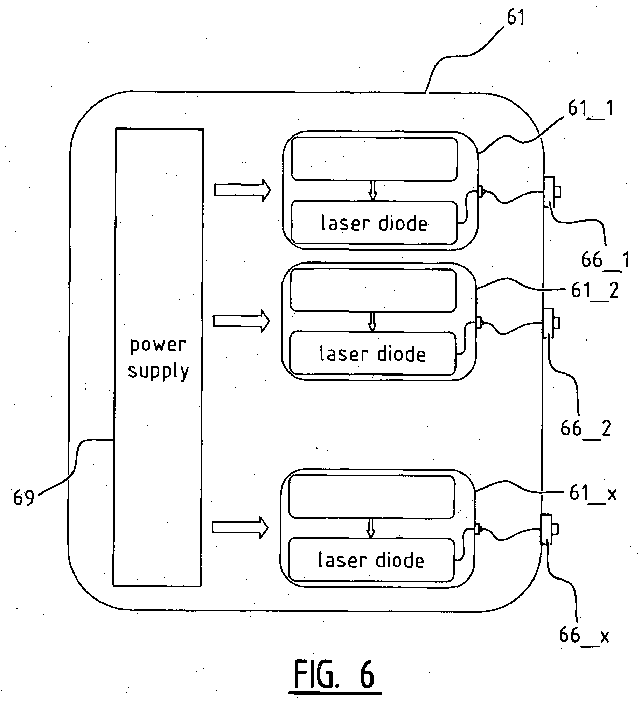

Figure 6 illustrates another further developed embodiment similar to the embodiment of figures 2 and 3, wherein a number of emitting modules 61_1, 61_2 etc. are provided in an emitting device 61. Each emitting module 61_1, 61_2 etc. is provided with a demodulator with voice module and with a laser diode. Further provided is a power supply module 69 which, as described for figure 4, can either be a battery or a module adapted to be connected to the mains and to convert the mains voltage to a suitable DC voltage.

The system and the method of the invention thus have the advantage that the number of optical fibres which can be simultaneously identified by different technicians is almost unlimited, even if these optical fibres are at different locations. Owing to the nature of the test signal there is typically almost no calibration of the optical receiving device necessary. A technician working at a second location requires less training since it is not necessary to interpret the measurement results, where this is indeed the case for the prior art testing devices where use is typically made of spectrum analysers, selectively calibrated optical power meters and so on.

The skilled person will appreciate that the embodiments of the emitting devices described in figures 2, 3 and 6 can comprise a random number of emitting modules. This number is however preferably sufficient to identify in each case a whole cable module or all optical fibres of the same FTTH-PON splitter. Optical fibre cables are typically made up of modules of 4, 8 or 12 fibres. An FTTH-PON network has a typical split ratio of 1:16; 1:32; 1:64; etc. A suitable number can thus be chosen as a function of the desired application.

Further note that the emitting device and the receiving device according to the invention can be used at the position of a random point on the optical fibre. It may for instance also be desirable to test an optical fibre without interrupting the fibre connection. It is for instance then possible to use a fibre coupling which is able to branch off a part of the outgoing signal, wherein this part is then carried to a receiving device. An optical splitter/combiner device could further be provided at the outer end of an optical fibre such that an identification test can be performed at all times without the fibre connection having to be interrupted.

Embodiments of the device, the system and the method of the invention can further be used in the welding of two cables. The emitting device can be placed here on the remote side of the cable and connected to the optical fibres of the cable. On the other side of the cable to be welded the fibre number can then be verified by means of a receiving device before the optical fibre is welded. Such a technique is particularly useful when optical fibres having the same colour are arranged on the same welding cassette.

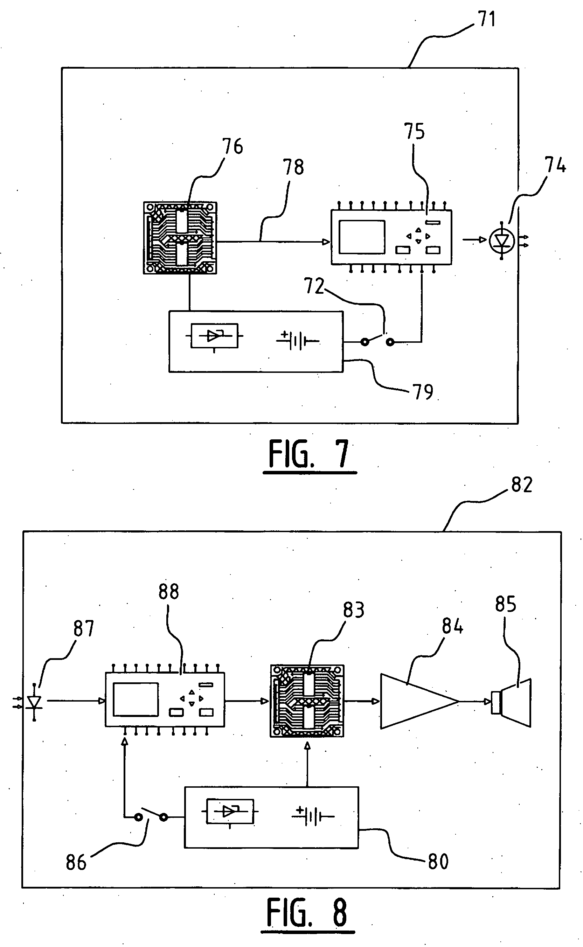

An example of a possible embodiment of the emitting device according to the invention is shown in more detail in figure 7. The emitting device comprises a modulator 75, for instance a 24-way modulator, which is coupled to one or more laser diodes or LED diodes 74. Modulator 75 is further coupled to a microcontroller, for instance a recording/playback chip 76 which transmits the coding 78 to be modulated on the optical signal as an input (coded bit stream) to modulator 75. The modulator is adapted to modulate the optical signal emitted by a diode 74 with a modulation signal associated with the entered coding 78. The emitting device typically further comprises a power supply module 79. The power supply module can be intended for coupling to the mains or can be a battery. Finally, a switch 72 is provided for the purpose of switching power supply module 79 on and off.

Figure 8 shows in more detail an embodiment of a receiving device according to the invention. Receiving device 82 comprises a photodiode 87 for receiving a modulated fibre signal from a diode 74 which is transmitted via the optical fibre to photodiode 87. Photodiode 87 is optionally followed by a preamplifier (not shown). Receiving device 82 further comprises a demodulator 88 adapted to demodulate the received modulated signal for the purpose of deriving therefrom a signal which is transmitted to a microprocessor 83 for further processing. Microprocessor 83 converts this signal to a suitable output signal which is supplied to an amplifier 84. Noted that amplifier 84 is optional and that additional amplifiers (not shown) can optionally be provided between photodiode 87 and microcontroller 83. Demodulator 88 can also form part of the same chip as microcontroller 83. The signal from microcontroller 83 is used to control an output means 85 such as a display screen and/or a loudspeaker. The receiving device further comprises a power supply module 80 adapted to be connected to the mains and/or comprising a battery. The receiving device can further be provided with a switch 86 for switching the receiving device on/off.

## Claims

1. Emitting device (11) for testing an optical fibre (13) with an identification, comprising an optical module (14) adapted to emit an optical signal over the optical fibre (13), **characterized in that** the emitting device (11) further comprises a modulator (15) which is coupled to the optical module (14) and adapted to modulate the optical signal with a modulation signal associated with the identification of the optical fibre (13) for testing.

2. Emitting device (11) as claimed in claim 1, **characterized in that** the optical module (14) is a laser module adapted to emit a laser signal.

3. Emitting device (11) as claimed in claim 1 or 2, **characterized in that** the emitting device (11) comprises an audio module with a memory in which an audio signal is stored, wherein the audio signal is associated with an identification of the optical fibre (13) for testing, and wherein the modulator is adapted to modulate the audio signal on the optical signal.

4. Emitting device (11) as claimed in claim 3, **characterized in that** the audio module is a voice module with a memory in which a spoken message is stored as the audio signal.

5. Emitting device (11) as claimed in claim 4, **characterized in that** the spoken message comprises a spoken number of the optical fibre (13).

6. Emitting device (11) as claimed in any of the foregoing claims, **characterized in that** the emitting device (11) comprises a text module with a memory in which a text message is stored, wherein the text message is associated with an identification of the optical fibre (13) for testing, and wherein the modulator (15) is adapted to modulate the text message to the optical signal.

7. Emitting device (11) as claimed in any of the foregoing claims, **characterized in that** the modulation signal is associated with a number of the optical fibre (13) for testing.

8. Emitting device (11) as claimed in any of the foregoing claims, **characterized in that** the emitting device (11) comprises a glass fibre connector (16) for connection to the optical fibre (13) for testing.

9. Emitting device (11) as claimed in any of the foregoing claims for testing a plurality of optical fibres (13) with respective identifications, **characterized in that** the device comprises a plurality of optical modules (21-i), wherein each optical module (21-i) is coupled to a modulator adapted to modulate a respective optical signal with a respective modulation signal associated with the respective identification of the respective optical fibre (13) of the plurality of optical fibres (23-i) for testing.

10. Emitting device (11) as claimed in claim 9, **characterized in that** the emitting device (11) comprises for each optical module (21-i) a glass fibre connector (26-i) for connection to the respective optical fibre (23-i) for testing of the plurality of optical fibres (23-i) for testing.

11. Emitting device (11) as claimed in claim 9 or 10, **characterized in that** a switch is provided for each optical module (21-i) for switching the optical module on and off.

12. System for testing an optical fibre comprising an emitting device (11) as claimed in any of the foregoing claims and a receiving device (12) comprising an optical receiver (17) adapted to receive the modulated optical signal from the emitting device (11), wherein the receiving device (12) further comprises a demodulator (18) adapted to demodulate the received modulated optical signal for the purpose of extracting therefrom the identification of the optical fibre (13) for testing.

13. System as claimed in claim 12 comprising an emitting device (11) according to any one of the claims 3-6, **characterized in that** the receiving device (12) comprises an audio playback module adapted to reproduce the audio signal; and/or **in that** the receiving device (12) comprises a display module for displaying the text message.

14. Method for testing an optical fibre (13) comprising of:
- modulating an optical signal with a modulation signal associated with an identification of the optical fibre (13) for testing;
- emitting this modulated optical signal from a first point of the optical fibre (13) for testing;
- receiving the modulated optical signal at a second point of the optical fibre (13) for testing;
- demodulating the received modulated optical signal for the purpose of deriving the identification of the optical fibre (13) for testing.

15. Method as claimed in claim 14, **characterized in that** the optical signal is a laser signal; and/or **in that** the modulation signal comprises an audio signal, in particular a spoken message, such as a spoken message with a spoken number of the optical fibre (13), and/or a text message.

## Patentansprüche

1. Emittierende Vorrichtung (11) zum Testen einer optischen Faser (13) mit einer Identifikation, aufweisend ein optisches Modul (14), das dazu eingerichtet ist, ein optisches Signal über die optische Faser (13) zu emittieren, **dadurch gekennzeichnet, dass** die emittierende Vorrichtung (11) weiter einen Modulator (15) aufweist, der mit dem optischen Modul (14) gekoppelt ist und der dazu eingerichtet ist, das optische Signal mit einem Modulationssignal zu modulieren, das mit der Identifikation der zu testenden optischen Faser (13) assoziiert ist.

2. Emittierende Vorrichtung (11) nach Anspruch 1, **dadurch gekennzeichnet, dass** das optische Modul ein Lasermodul ist, das dazu eingerichtet ist, ein Lasersignal zu emittieren.

3. Emittierende Vorrichtung (11) nach einem der Ansprüche 1 oder 2, **dadurch gekennzeichnet, dass** die emittierende Vorrichtung (11) ein Audiomodul mit einem Speicherelement, in dem ein Audiosignal gespeichert ist, aufweist, wobei das Audiosignal mit einer Identifikation der zu testenden optischen Faser (13) assoziiert ist, und wobei der Modulator (15) dazu eingerichtet ist, das Audiosignal auf das optische Signal zu modulieren.

4. Emittierende Vorrichtung (11) nach Anspruch 3, **dadurch gekennzeichnet, dass** das Audiomodul ein Sprachmodul mit einem Speicherelement ist, auf dem als Audiosignal eine gesprochene Nachricht gespeichert ist.

5. Emittierende Vorrichtung (11) nach Anspruch 4, **dadurch gekennzeichnet, dass** die gesprochene Nachricht eine gesprochene Nummer der optischen Faser (13) aufweist.

6. Emittierende Vorrichtung (11) nach einem der vorstehenden Ansprüche, **dadurch gekennzeichnet, dass** die emittierende Vorrichtung (11) ein Textmodul mit einem Speicherelement, auf dem eine Textnachricht gespeichert ist, aufweist, wobei die Textnachricht mit einer Identifikation der zu testenden optischen Faser (13) assoziiert ist und wobei der Modulator (15) dazu eingerichtet ist, die Textnachricht auf das optische Signal zu modulieren.

7. Emittierende Vorrichtung (11) nach einem der vorstehenden Ansprüche, **dadurch gekennzeichnet, dass** das Modulationssignal mit einer Nummer der zu testenden optischen Faser (13) assoziiert ist.

8. Emittierende Vorrichtung (11) nach einem der vorstehenden Ansprüche, **dadurch gekennzeichnet, dass** die emittierende Vorrichtung (11) einen Glasfaseranschluss (16) zum Anschließen der zu testenden optischen Faser (13) aufweist.

9. Emittierende Vorrichtung (11) nach einem der vorstehenden Ansprüche zum Testen einer Mehrzahl von optischen Fasern (23_1 - 23_i) mit entsprechenden Identifikationen, **dadurch gekennzeichnet, dass** die emittierende Vorrichtung (11) eine Mehrzahl von optischen Modulen (21_1 - 21_i) aufweist, wobei jedes optische Modul (21_1 - 21_i) mit einem Modulator (15) gekoppelt ist, der dazu eingerichtet ist, ein entsprechendes optisches Signal mit einem entsprechenden Modulationssignal zu modulieren, das mit der entsprechenden Identifikation der entsprechenden optischen Faser (23_1 - 23_i) aus der Mehrzahl von zu testenden optischen Fasern (23_1 - 23_i) assoziiert ist.

10. Emittierende Vorrichtung (11) nach Anspruch 9, **dadurch gekennzeichnet, dass** die emittierende Vorrichtung (11) zu jedem optischen Modul (21_1 - 21_i) einen Glasfaseranschluss (26_1 - 26_i) zum Anschließen der entsprechenden zu testenden optischen Faser (23_1 - 23_i) aus der Mehrzahl der zu testenden optischen Fasern (23_1 - 23_i) aufweist.

11. Emittierende Vorrichtung (11) nach einem der Ansprüche 9 oder 10, **dadurch gekennzeichnet, dass** zu jedem optischen Modul (21_1 - 21_i) ein Schalter zum An- und Ausschalten des optischen Moduls (21_1 - 21_i) angeordnet ist.

12. System zum Testen einer optischen Faser (13) aufweisend eine emittierende Vorrichtung (11) gemäß einem der vorstehenden Ansprüche und eine empfangende Vorrichtung (12) aufweisend einen optischen Empfänger (17), der dazu eingerichtet ist, das modulierte optische Signal von der emittierenden Vorrichtung (11) zu empfangen, wobei die empfangende Vorrichtung (12) ferner einen Demodulator (18) aufweist, der dazu eingerichtet ist, das empfangene modulierte optische Signal zu demodulieren, um daraus die Identifikation der zu testenden optischen Faser (13) zu extrahieren.

13. System nach Anspruch 12 aufweisend eine emittierende Vorrichtung (11) gemäß einem der Ansprüche 3 bis 6, **dadurch gekennzeichnet, dass** die empfangende Vorrichtung (12) ein Audiowiedergabemodul aufweist, das dazu eingerichtet ist, das Audiosignal wiederzugeben; und/oder dadurch, dass die empfangende Vorrichtung (12) ein Anzeigemodul zum Anzeigen der Textnachricht aufweist.

14. Verfahren zum Testen einer optischen Faser (13) aufweisend:
- Modulieren eines optischen Signals mit einem Modulationssignal, das mit einer Identifikation der zu testenden optischen Faser (13) assoziiert ist;
- Emittieren des modulierten optischen Signals an einem ersten Punkt der zu testenden optischen Faser (13);
- Empfangen des modulierten optischen Signals an einem zweiten Punkt der zu testenden optischen Faser (13);
- Demodulieren des empfangenen modulierten optischen Signals, um die Identifikation der zu testenden optischen Faser (13) zu erhalten.

15. Verfahren nach Anspruch 14, **dadurch gekennzeichnet, dass** das optische Signal ein Lasersignal ist; und/oder dadurch, dass das Modulationssignal ein Audiosignal aufweist, insbesondere eine gesprochene Nachricht, wie beispielsweise eine gesprochene Nachricht mit einer gesprochenen Nummer der optischen Faser (13); und/oder eine Textnachricht.

## Revendications

1. Dispositif émetteur (11) permettant de tester une fibre optique (13) avec une identification, comprenant un module optique (14) conçu pour émettre un signal optique dans la fibre optique (13), **caractérisé en ce que** le dispositif émetteur (11) comprend en outre un modulateur (15) qui est couplé au module optique (14) et conçu pour moduler le signal optique avec un signal de modulation associé à l'identification de la fibre optique (13) à tester.

2. Dispositif émetteur (11) selon la revendication 1, **caractérisé en ce que** le module optique (14) est un module laser conçu pour émettre un signal laser.

3. Dispositif émetteur (11) selon la revendication 1 ou 2, **caractérisé en ce que** le dispositif émetteur (11) comprend un module audio avec une mémoire dans laquelle est stocké un signal audio, dans lequel le signal audio est associé à l'identification de la fibre optique (13) à tester, et dans lequel le modulateur est conçu pour moduler le signal audio sur le signal optique.

4. Dispositif émetteur (11) selon la revendication 3, **caractérisé en ce que** le module audio est un module vocal avec une mémoire dans laquelle un message parlé est stocké en tant que signal audio.

5. Dispositif émetteur (11) selon la revendication 4, **caractérisé en ce que** le message parlé comprend le numéro parlé de la fibre optique (13).

6. Dispositif émetteur (11) selon l'une quelconque des revendications précédentes, **caractérisé en ce que** le dispositif émetteur (11) comprend un module textuel avec une mémoire dans laquelle est stocké un message textuel, dans lequel le message textuel est associé à l'identification de la fibre optique (13) à tester, et dans lequel le modulateur (15) est conçu pour moduler le message textuel sur le signal optique.

7. Dispositif émetteur (11) selon l'une quelconque des revendications précédentes, **caractérisé en ce que** le signal de modulation est associé au numéro de la fibre optique (13) à tester.

8. Dispositif émetteur (11) selon l'une quelconque des revendications précédentes, **caractérisé en ce que** le dispositif émetteur (11) comprend un connecteur de fibre de verre (16) destiné à être connecté à la fibre optique (13) à tester.

9. Dispositif émetteur (11) selon l'une quelconque des revendications précédentes permettant de tester une pluralité de fibres optiques (13) avec des identifications respectives, **caractérisé en ce que** le dispositif comprend une pluralité de modules optiques (21-i) ; dans lequel chaque module optique (21-i) est couplé à un modulateur conçu pour moduler un signal optique respectif avec un signal de modulation respectif associé à l'identification respective de la fibre optique respective (13) de la pluralité de fibres optiques (23-i) à tester.

10. Dispositif émetteur (11) selon la revendication 9, **caractérisé en ce que** le dispositif émetteur (11) comprend pour chaque module optique (21-i) un connecteur de fibre de verre (26-i) destiné à être connecté à la fibre optique respective (23-i) pour tester la pluralité de fibres optiques (23-i) à tester.

11. Dispositif émetteur (11) selon la revendication 9 ou 10, **caractérisé en ce qu**'un commutateur est prévu pour chaque module optique (21-i), pour mettre le module optique sous tension et hors tension.

12. Système permettant de tester une fibre optique et comprenant un dispositif émetteur (11) selon l'une quelconque des revendications précédentes et un dispositif récepteur (12) comprenant un récepteur optique (17) conçu pour recevoir le signal optique modulé provenant du dispositif émetteur (11), dans lequel le dispositif récepteur (12) comprend en outre un démodulateur (18) conçu pour démoduler le signal optique modulé reçu afin d'en extraire l'identification de la fibre optique (13) à tester.

13. Système selon la revendication 12 comprenant un dispositif émetteur (11) selon l'une quelconque des revendications 3 à 6, **caractérisé en ce que** le dispositif récepteur (12) comprend un module de lecture audio conçu pour reproduire le signal audio ; et/ou **en ce que** le dispositif récepteur (12) comprend un module d'affichage permettant d'afficher le message textuel.

14. Procédé permettant de tester une fibre optique (13) et comprenant :
- la modulation d'un signal optique avec un signal de modulation associé à l'identification de la fibre optique (13) à tester ;
- l'émission de ce signal optique modulé d'un premier point de la fibre optique (13) à tester ;
- la réception du signal optique modulé en un second point de la fibre optique (13) à tester ;
- la démodulation du signal optique modulé reçu afin d'obtenir l'identification de la fibre optique (13) à tester.

15. Procédé selon la revendication 14, **caractérisé en ce que** le signal optique est un signal laser ; et/ou **en ce que** le signal de modulation comprend un signal audio, en particulier un message parlé, tel qu'un message parlé avec le numéro parlé de la fibre optique (13) ; et/ou un message textuel.
